(19) Europäisches Patentamt
European Patent Office
Office européen des brevets

(11) EP 3 830 938 B1

(12) **EUROPÄISCHE PATENTSCHRIFT**

(45) Veröffentlichungstag und Bekanntmachung des Hinweises auf die Patenterteilung:
**02.11.2022 Patentblatt 2022/44**

(21) Anmeldenummer: **19734046.6**

(22) Anmeldetag: **25.06.2019**

(51) Internationale Patentklassifikation (IPC):
**H02M 1/32** (2007.01)    **G01K 7/42** (2006.01)
**G06F 30/00** (2020.01)

(52) Gemeinsame Patentklassifikation (CPC):
**H02M 1/32; G01K 7/425; G06F 30/367;**
G06F 30/15; G06F 2119/08; H02M 1/327

(86) Internationale Anmeldenummer:
**PCT/EP2019/066790**

(87) Internationale Veröffentlichungsnummer:
**WO 2020/025220 (06.02.2020 Gazette 2020/06)**

(54) **VERFAHREN UND VORRICHTUNG ZUM SCHÄTZEN DER TEMPERATUR EINES HALBLEITERBAUELEMENTES SOWIE COMPUTERPROGRAMM**

METHOD AND APPARATUS FOR ESTIMATING THE TEMPERATURE OF A SEMICONDUCTOR DEVICE AND COMPUTER PROGRAM

PROCÉDÉ ET APPAREIL POUR ESTIMER LA TEMPÉRATURE D'UN DISPOSITIF À SEMI-CONDUCTEUR ET PROGRAMME D'ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2018 DE 102018212870**

(43) Veröffentlichungstag der Anmeldung:
**09.06.2021 Patentblatt 2021/23**

(73) Patentinhaber: **VOLKSWAGEN AKTIENGESELLSCHAFT**
**38440 Wolfsburg (DE)**

(72) Erfinder:
• **KREMER, Jean-Paul**
  **38304 Wolfenbüttel (DE)**
• **HALLMANN, Udo**
  **31246 Lahstedt (Ilsede) (DE)**

(56) Entgegenhaltungen:
EP-A2- 1 770 851          CN-A- 105 224 819
CN-A- 105 574 285          CN-A- 106 326 532
DE-A1-102012 213 349      US-A1- 2005 160 387

**Beschreibung**

Die Erfindung betrifft ein Verfahren zum Schätzen der Temperatur eines Halbleiterbauelementes bei dem die aktuelle Temperatur mit Hilfe eines Temperaturverhalten-Modells geschätzt wird. Die Erfindung betrifft weiterhin eine entsprechend angepasste Vorrichtung sowie ein entsprechend angepasstes Computerprogramm.

Leistungshalbleitermodule werden in vielen Bereichen der Technik eingesetzt. Als Beispiele seien genannt Frequenzumrichter, Schaltnetzteile, Wechselrichter, Induktionskochfelder, und auch Antriebstechnik. Wie bei der Antriebstechnik werden die Leistungshalbleitermodule auch bei der Fahrzeugtechnik vermehrt eingesetzt und werden zukünftig noch stärker zur Anwendung kommen, da der Bereich der Elektromobilität stetig wächst.

Besonders hervorzuheben sind IGBT-Module, entsprechend Insulated-Gate Bipolar Transistor, die i.d.R. mehrere Leistungstransistoren des Typs IGBT und antiparallel geschaltete Leistungsdioden, eingesetzt als Freilaufdioden, enthalten. Sie werden im Automobilbereich z.B. für die Ansteuerung der elektrischen Antriebsmotoren oder in Ladegeräten für Elektrofahrzeuge eingesetzt. Elektrische Komponenten, insbesondere Elektromotoren, finden sich vielfach in Elektrofahrzeugen oder auch in Fahrzeugen mit Verbrennungsmotor, für bestimmte Komfortfunktionen, wie Scheibenwischer, zur Lenkkraftunterstützung, Sitzverstellung, Fensterheber, Türversteller usw. Diese Komponenten enthalten i.d.R. Leistungshalbleiter, z.B. Transistoren des Typs MOSFET. Angesteuert werden die Leistungshalbleiter über Steuergeräte, die entsprechende Steuersignale erzeugen. I.d.R. weisen die Steuergeräte einen oder mehrere Mikrocontroller auf, die entsprechend programmiert sind und die Steuersignale generieren.

Im Betrieb entstehen in den Leistungstransistoren und den Dioden der IGBT-Module WärmeVerluste, die zu einer Erhöhung ihrer Temperatur führen. Bei höherer Temperatur besteht die Gefahr, dass ein Transistor oder eine Diode zerstört wird. Weiterhin führen die Temperaturzyklen zu einer Verkürzung der Lebensdauer der Komponenten. Daher wird von dem Hersteller der IGBT-Module empfohlen, dass die Software eines Steuergerätes, das ein IGBT-Modul ansteuert, mit einer Schutzfunktion (Bauteilschutz) versehen wird, die die Temperatur des IGBT-Moduls laufend überwacht und ggfs. einschreitet, wenn eine unzulässige Temperatur einer Komponente des IGBT-Moduls erreicht wird, oder schon vorher, um Schäden zu verhindern. Die übliche Maßnahme ist die Leistungsreduktion bei der Ansteuerung bis hin zur Abschaltung. Maßgeblich für Bauteilschutz und Lebensdauer ist die Sperrschichttemperatur der jeweiligen Halbleiterkomponente.

Um einen Bauteilschutz zu ermöglichen, müssen die Sperrschichttemperaturen der einzelnen IGBTs und Dioden entweder gemessen oder aus anderen verfügbaren Messgrößen abgeschätzt werden. Das Anbringen von Sensoren an allen Komponenten ist aus Kostengründen nachteilhaft und auch noch fehleranfällig. Daher wird ein Rechenmodellansatz angestrebt. Es ist z.B. möglich, aus den gemessenen elektrischen Strömen und Spannungen die Sperrschichttemperatur abzuschätzen, durch die Verwendung eines Temperaturmodells. Das Temperaturmodell wird dafür in die Software des Steuergerätes integriert, z.B. in das Antriebssteuergerät des Fahrzeugs.

Die Methoden und Parameter für die Berechnung der Sperrschichttemperatur der IGBTs und Dioden werden vom Halbleiterhersteller angegeben, z.B. im Datenblatt für das IGBT-Modul. Häufig wird dafür das sogenannte Foster-Modell verwendet (auch Partialbruch-Netzwerk genannt).

Das Foster-Modell stellt die thermische Impedanz zwischen zwei Punkten dar, z.B. die thermische Impedanz zwischen der Sperrschicht eines Halbleiters und der Kühlflüssigkeit, mit welcher das Halbleiter-Modul abgekühlt wird. Aus der thermischen Impedanz und der Verlustleistung im Halbleiter kann die entsprechende Temperaturdifferenz berechnet werden, z.B. die Temperaturdifferenz zwischen Sperrschicht und der Kühlflüssigkeit.

Die Referenztemperatur, z.B. die Temperatur der Kühlflüssigkeit, wird mit einem Temperatursensor gemessen. Die Summen der Referenztemperatur mit den berechneten Temperaturdifferenzen ergeben die absoluten Temperaturen der einzelnen Halbleiter.

Für ein definiertes IGBT-Modul kann das Foster-Modell aus den Angaben im Datenblatt des IGBT-Moduls konstruiert werden. Die Angaben im Datenblatt betreffen ein Foster-Modell von höherer Ordnung, typischerweise zwischen 3 und 5. Die Implementierung dieses Modells führt dann zu einem hohen Rechenaufwand.

Hinzu kommt noch, dass die IGBT-Module mehrere IGBTs und Dioden beinhalten, was den Rechenaufwand entsprechend weiter erhöht. Eine Abschätzung des Rechenaufwandes ergibt sich, wenn man die Ordnung des Foster-Modells mit der Anzahl an Halbleiterelementen multipliziert. Zum Beispiel beinhaltet eine dreiphasige Brückenschaltung 6 IGBTs und 6 Dioden, also 12 Halbleiterelemente. Für hochverfügbare Motoransteuerungen, mit einer Anzahl an Phasen von 6, 9 oder 12 Phasen, ergibt sich eine noch höhere Anzahl an Halbleiterelementen und also ein noch höherer Rechenaufwand.

Der Einsatz eines Rechenmodells zur Abschätzung der Sperrschicht-Temperatur zum Schutz des Bauteils ist aus den Dokumenten DE 102 60 106 A1 und US 9 705 487 B2 bekannt.

Aus der DE 10 2010 014 070 B4 ist es bekannt, ein komplexes Batteriemodell einer Modellreduktion zu unterziehen, um den Rechenaufwand zu verringern. Dabei wird die Methode der "Balanced Truncation" eingesetzt.

Die DE 10 2012 213 349 A1 beschreibt ein Leistungsmodulsystem für ein Fahrzeug, mit einer Schaltkreisplatine, einem Leistungstransistor, welcher auf der Schaltkreisplatine befestigt ist, sowie einem Temperatursensor, welcher auf der Schaltkreisplatine an einem Messort befestigt ist, welcher entfernt von dem Leistungstransistor ist. Der Temperatursensor ist eingerichtet, eine Echtzeit-Temperatur an dem Messort zu messen. Das System umfasst zudem einen Prozessor, welcher mit dem Temperatursensor gekoppelt ist, um eine vorhergesagte Echtzeit-Siliziumtemperatur für den Leistungstransistor aus der gemessenen Echtzeit-Temperatur zu erzeugen. Die vorhergesagte Echtzeit-Siliziumtemperatur wird unter Verwendung einer ausgewählten Kalibrierkurve erzeugt, welche einem momentanen Betriebszustand des Fahrzeuges entspricht.

Die EP 1 770 851 A2 beschreibt ein Verfahren zum Vorhersagen der Sperrschichttemperatur mindestens einer ersten Schaltvorrichtung in einem Leistungsumwandlungsmodul, das die erste Schaltvorrichtung und mindestens eine zweite Schaltvorrichtung enthält. Bei dem Verfahren wird ein thermischer Kreuzimpedanzwert identifiziert, der anzeigt, wie die Temperatur der zweiten Schaltvorrichtung die Temperatur der ersten Schaltvorrichtung beeinflusst. Der thermische Kreuzimpedanzwert wird dann zum Vorhersagen der Temperatur der mindestens einen ersten Schaltvorrichtung verwendet.

Die CN 106 326 532 A beschreibt ein Modellierungsverfahren eines IGBT-Wärmeübertragungsmodells mit mehreren Zeitskalen. Dabei wird ein Cauer-Modell dritter Ordnung aus einem Cauer-Modell siebter Ordnung entwickelt und für bestimmte Betriebsbedingungen optimiert.

Die CN 105 224 819 A beschreibt ein Verfahren zur Optimierung des dynamischen Ansprechverhaltens einer Wärmesenke einer Leistungsvorrichtung auf der Basis numerischer Iteration. Bei dem Verfahren wird ein integrales Foster-Wärmenetzmodell aufgebaut. Zudem wird eine Leistungszyklus-Temperaturkurve entsprechend der Gesamtantwort und der Nulleingangsantwort des Foster-Wärmenetzmodells ermittelt. Schließlich wird anhand der Leistungszyklus-Temperaturkurve ein Numerisierungsmodul für die Wärmesenke geschaffen.

Die US2005160387 beschreibt Temperaturmodelle für integrierte Schaltungen und erwähnt verschiedene Rechenmethoden zur Reduzierung der Ordnung eines Temperatur-Modells.

Eine Besonderheit besteht noch für Antriebsanwendungen, bei denen Elektromotoren angesteuert werden. Dort steigt der Rechenaufwand für die Temperaturschätzung noch mit der Drehzahl des elektrischen Motors, weil die Phasenströme mit höherer Frequenz verlaufen. Entsprechend variieren auch die thermischen Verluste in den Halbleitern mit höherer Frequenz. Dies erfordert einen kurzen Rechentakt für die Berechnungen gemäß des Temperaturmodells. Bei den Motoren von Elektrofahrzeugen, insbesondere Elektroautos, sind hohe Drehzahlen gefragt, damit die Höchstgeschwindigkeit erreicht werden kann. Bei diesen Motoren ist es so, dass sie große Drehzahlbereiche durchlaufen müssen, damit ein Getriebe eingespart werden kann. Asynchronmotoren können Nenndrehzahlen von bis zu 25.000 Umdrehungen pro Minute erreichen, während Synchronmotoren Nenndrehzahlen von circa 11.000 Umdrehungen pro Minute ermöglichen.

Es besteht also der Bedarf für eine Vereinfachung der Berechnung der Sperrschichttemperaturen für Halbleitermodule, um eine zeitrealistische Implementierung (Laufzeit des Algorithmus) zu erreichen. Dabei kommt es auch auf eine Optimierung für bestimmte Arbeitsbereiche an. Dies ist Aufgabe der Erfindung. Ebenfalls soll eine ausreichende Genauigkeit bei der Temperaturschätzung erreicht werden, um einen wirksamen Bauteilschutz zu ermöglichen.

Diese Aufgabe wird durch ein Verfahren zum Schätzen der Temperatur eines Halbleiterelementes gemäß Anspruch 1, die entsprechende Vorrichtung gemäß Anspruch 8 und ein entsprechendes Computerprogramm gemäß Anspruch 11 gelöst.

Die abhängigen Ansprüche beinhalten vorteilhafte Weiterbildungen und Verbesserungen der Erfindung entsprechend der nachfolgenden Beschreibung dieser Maßnahmen.

Die Lösung besteht darin, bei einem Verfahren zum Schätzen der Temperatur eines Halbleitermoduls, das von einer Recheneinheit angesteuert wird, wobei die Temperaturschätzung in derselben oder einer anderen Recheneinheit durchgeführt wird, zur Temperaturschätzung eine in der Ordnung reduzierte Version eines für das Halbleitermodul angegebenen Temperaturmodells einzusetzen.

Für Leistungshalbleitermodule, insbesondere IGBT-Module, wird oft das Foster-Modell eingesetzt. Dieses wird in den Datenblättern der IGBT-Module parametriert. Typischerweise erfolgt eine Software-Implementierung dieses parametrierten Foster-Modells, die auf den Angaben im Datenblatt basiert, dann aber den erhöhten Rechenaufwand verursacht. Gemäß der erfindungsgemäßen Lösung erfolgt eine Modellreduktion vor der Softwareimplementierung. Konkret gesagt, das Foster-Modell wird in den Datenblättern typischerweise mit einer Ordnung zwischen 3 und 5 parametriert. Durch die Modellreduktion wird ein Modell kleinerer Ordnung parametriert. Mit der Modellreduktion wird eine Vereinfachung der Berechnung der Sperrschichttemperatur von Halbeitermodulen erreicht. Der Rechenaufwand wird entsprechend reduziert.

Es gibt verschiedene Rechenmethoden für die Modellreduktion, die in der Literatur angegeben werden. Manche von diesen Rechenmethoden sind bereits in Entwicklungsumgebungen integriert, z.B. in der Control System Toolbox der Simulationssoftware Matlab®. Eine häufig verwendete Rechenmethode ist die sog. Methode der "Balanced Truncation". Es ist vorteilhaft, wenn die reduzierte Version des Foster-Modells durch die Rechenmethode der "Balanced Truncation" errechnet wird. Diese Rechenmethode ermöglicht eine Optimierung der Modellreduktion in definierten Arbeitsbereichen (Frequenzbereichen). In diesem Fall wird der Fehler zwischen dem reduzierten Modell und dem exakteren Modell höherer Ordnung in den definierten Frequenzbereichen minimiert. Diese Möglichkeit ist vorteilhaft für die betrachtete Anwendung, weil die thermischen Verluste in IGBT-Modulen häufig in definierten Frequenzbereichen stattfinden.

Die numerischen Werte für die Parameter des reduzierten Modells ergeben sich bei der Rechenmethode ebenfalls. Nach der Modellreduktion kann die Softwareimplementierung mit den berechneten Formeln und Parametern erfolgen. Die Modellreduktion kann bei der Entwicklung des Steuergerätes stattfinden. Dies kann in leistungsfähigen Rechnern erfolgen, und braucht nicht in dem Steuergerät selbst durchgeführt werden. Der Rechenaufwand für die Berechnung des reduzierten Modells spielt daher für den späteren Einsatz des Steuergerätes keine große Rolle, wohl aber der Rechenaufwand für die Abschätzung der Temperatur nach dem reduzierten Modell.

Die Parameter des Foster-Modells werden in den Datenblättern angegeben, wobei für IGBT-Module die Ordnung des Modells typischerweise zwischen 3 und 5 liegt. Für ein Foster-Modell von Ordnung N werden als Parameter N thermische Widerstände $r_1$ bis $r_N$ und N thermische Zeitkonstanten $\tau_1$ bis $\tau_N$ angegeben. Die thermische Impedanz wird mit der folgenden Formel berechnet:

$$Z_{th}(t) = \sum_{i=1}^{N} r_i \left(1 - e^{-\frac{t}{\tau_i}}\right)$$

Beispielsweise, für ein Modell vierter Ordnung wird die thermische Impedanz nach folgender Formel berechnet:

$$Z_{th}(t) = r_1\left(1 - e^{-\frac{t}{\tau_1}}\right) + r_2\left(1 - e^{-\frac{t}{\tau_2}}\right) + r_3\left(1 - e^{-\frac{t}{\tau_3}}\right) + r_4\left(1 - e^{-\frac{t}{\tau_4}}\right)$$

In äquivalenter Form kann die thermische Impedanz als Übertragungsfunktion von einer Verlustleistung $P_{Loss}$ zu einer Temperaturdifferenz $\Delta T$ dargestellt werden. Die entsprechende Formel lautet:

$$H_{Foster}(s) = \frac{\Delta T(s)}{P_{Loss}(s)}$$

wobei s die Laplace-Variable ist.

Die Übertragungsfunktion des parametrierten Foster-Modells von Ordnung N wird nach folgender Formel berechnet:

$$H_{Foster}(s) = \sum_{i=1}^{N} \frac{\frac{r_i}{\tau_i}}{s + \frac{1}{\tau_i}}.$$

, wobei $r_1$ bis $r_N$ die im Datenblatt angegebenen N thermischen Widerstände des jeweiligen Halbleiterelementes sind, und $\tau_1$ bis $\tau_N$ die entsprechenden N thermischen Zeitkonstanten sind, und wobei s die Laplace-Variable der Übertragungsfunktion ist.

Diese Formel wird für eine zeitdiskrete Berechnung umgerechnet. Aus der Übertragungsfunktion für kontinuierliche Signale, berechnet mit Laplace-Transformation, wird dann die Übertragungsfunktion für zeitdiskrete Signale berechnet nach der Z-Transformation. Es ist vorteilhaft, wenn die folgende Formel für die zeitdiskrete Berechnung eingesetzt wird,

$$H_{Foster}(z) = \frac{\sum_{i=0}^{N} a_i z^i}{z^N + \sum_{i=0}^{N-1} b_i z^i},$$

wobei die Parameter $a_0, ..., a_N$ und $b_0, ..., b_{N-1}$ aus den Parametern $r_1, ..., r_N$ und $\tau_1, ..., \tau_N$ sowie aus dem gewünschten Rechentakt berechnet werden. Für die Umwandlung von der kontinuierlichen Darstellung zur diskreten Darstellung existieren mehrere Rechenmethoden. Erwähnt werden hier die Methoden der bilinearen Transformation, die Impulsinvarianzmethode und die Methode der matched-z-Transformation. Beispielsweise lautet die zeitdiskrete Übertragungsfunktion für ein Foster-Modell 4. Ordnung:

$$H_{Foster,4}(z) = \frac{a_4 z^4 + a_3 z^3 + a_2 z^2 + a_1 z + a_0}{z^4 + b_3 z^3 + b_2 z^2 + b_1 z + b_0},$$

wobei die Parameter $a_0$, ..., $a_4$ und $b_0$, ..., $b_3$ aus den Parametern $r_1$, ..., $r_4$ und $\tau_1$, ..., $\tau_4$ sowie aus dem gewünschten Rechentakt berechnet werden. Diese Formel verursacht ebenfalls einen hohen Rechenaufwand.

Wenn die Angaben im Datenblatt einem Foster-Modell 5. Ordnung entsprechen, erhöht sich der Rechenaufwand weiter.

Deshalb ist es vorteilhaft, wenn für eine zeitdiskrete Berechnung der Übertragungsfunktion nach dem reduzierten Modell erster Ordnung die folgende Formel eingesetzt wird:

$$H_{red,1}(z) = \frac{\alpha_1 z + \alpha_0}{z + \beta_0},$$

wobei $\alpha_0$, $\alpha_1$, und $\beta_0$ die berechneten Parameter nach der Methode der "Balanced Truncation" sind.

Ebenso ist es vorteilhaft, wenn für eine zeitdiskrete Berechnung der Übertragungsfunktion nach dem reduzierten Modell zweiter Ordnung die folgende Formel eingesetzt wird,

$$H_{red,2}(z) = \frac{\alpha_2 z^2 + \alpha_1 z + \alpha_0}{z^2 + \beta_1 z + \beta_0},$$

wobei $\alpha_0$, $\alpha_1$, $\alpha_2$, $\beta_0$ und $\beta_1$, die berechneten Parameter nach der Methode der "Balanced Truncation" sind.

Ebenso ist es vorteilhaft, wenn für eine zeitdiskrete Berechnung der Übertragungsfunktion nach dem reduzierten Modell dritter Ordnung die folgende Formel eingesetzt wird,

$$H_{red,3}(z) = \frac{\alpha_3 z^3 + \alpha_2 z^2 + \alpha_1 z + \alpha_0}{z^3 + \beta_2 z^2 + \beta_1 z + \beta_0},$$

wobei $\alpha_0$, $\alpha_1$, $\alpha_2$, $\alpha_3$, $\beta_0$, $\beta_1$ und $\beta_2$, die berechneten Parameter nach der Methode der "Balanced Truncation" sind. Die jeweiligen Parametersätze $\alpha_0$, $\alpha_1$, und $\beta_0$; $\alpha_0$, $\alpha_1$, $\alpha_2$, $\beta_0$ und $\beta_1$ und $\alpha_0$, $\alpha_1$, $\alpha_2$, $\alpha_3$, $\beta_0$, $\beta_1$ und $\beta_2$ werden aus den Parametern $r_1$ bis $r_N$ und $\tau_1$, ..., $\tau_N$ sowie aus dem gewählten Rechentakt berechnet.

Die Methode der "Balanced Truncation" ermöglicht eine Optimierung der Modellreduktion in definierten Frequenzbereichen. Der Fehler zwischen dem reduzierten Modell und dem exakteren Modell höherer Ordnung wird in den definierten Frequenzbereichen minimiert. Diese Möglichkeit ist vorteilhaft für die Modellreduktion des Foster-Modells, weil die thermischen Verluste in IGBT-Modulen in definierten Frequenzbereichen stattfinden. Ein erster Frequenzbereich wird dadurch definiert, dass die thermischen Verluste in einem Halbleiter immer positiv sind. Dadurch enthalten die Verluste einen Gleichanteil, d.h. einen Anteil mit Frequenz 0 Hz. Ein zweiter Frequenzbereich wird durch das Frequenzspektrum von Strom und Spannung im Halbleiter definiert. Dieses Spektrum kann aus den Kenndaten eines Systems abgeleitet werden, z.B. für eine Anwendung in einem Antriebsystem ist das Spektrum von der Motordrehzahl abhängig. Weitere Komponenten von Strom und Spannung mit höherer Frequenz werden durch die Signalform verursacht, mit der das Halbleiterelement angesteuert wird. Als Beispiel wird die PWM-Modulation (Pulsweiten-Modulation) genannt, die zur Ansteuerung oft eingesetzt wird. Die thermische Impedanz von Halbleitern fällt aber mit der Frequenz ab, sodass die Komponenten der thermischen Verluste mit höherer Frequenz nur eine geringere Auswirkung auf die Sperrschichttemperatur haben. Daher können die Komponenten mit höherer Frequenz für die Modellreduktion vernachlässigt werden. Zumindest kann es toleriert werden, wenn die mit dem reduzierten Modell abgeschätzte thermische Impedanz bei hoher Frequenz eine geringe Abweichung enthält. Die Abweichung darf nur nicht so groß werden, dass sich daraus eine Temperaturdifferenz von mehr als 5 K gegenüber dem exakteren Foster-Modell der Ordnung N ergibt.

Für das Verfahren hat es sich als vorteilhaft erwiesen, wenn ein reduziertes Modell höherer Ordnung gegenüber einem reduzierten Modell niedrigerer Ordnung zur Temperaturschätzung dann eingesetzt wird, wenn die Abweichung in einem gewählten Frequenzbereich bei der Berechnung des Temperatureffektes nach dem Modell niedrigerer Ordnung betragsmäßig größer als 5 K gegenüber dem exakteren Foster-Modell der Ordnung N liegt. Das ist ein guter Kompromiss zwischen erforderlicher Genauigkeit der Temperaturschätzung und Vermeidung des hohen Rechenaufwandes.

Für die entsprechend angepasste Vorrichtung und das entsprechende Computerprogramm gelten die entsprechenden Vorteile.

Ein Ausführungsbeispiel der Erfindung ist in den Zeichnungen dargestellt und wird nachfolgend anhand der Figuren näher erläutert.

Es zeigen:

Fig. 1 das typische Cockpit eines Fahrzeuges;

Fig. 2 ein Blockschaltbild der Bord-Elektronik eines Fahrzeuges;

Fig. 3 eine Abbildung eines handelsüblichen IGBT-Moduls mit 6 IGBTs;

Fig. 4 ein Bode Diagramm, in dem die Ergebnisse des Foster-Temperaturmodells 4. Ordnung mit einem reduzierten Modell erster Ordnung vergleichbar dargestellt sind;

Fig. 5 eine vergleichende Darstellung für die thermische Impedanz der Modelle Foster-Modell 4. Ordnung und reduziertes Modell 1. Ordnung;

Fig. 6 eine vergleichende Darstellung für die Impulsantwort der Modelle Foster-Modell 4. Ordnung und reduziertes Modell 1. Ordnung;

Fig. 7 ein Bode Diagramm, in dem die Ergebnisse des Foster-Temperaturmodells 4. Ordnung mit einem reduzierten Modell 2. Ordnung vergleichbar dargestellt sind;

Fig. 8 eine vergleichende Darstellung für die thermische Impedanz der Modelle Foster-Modell 4. Ordnung und reduziertes Modell 2. Ordnung; und

Fig. 9 eine vergleichende Darstellung für die Impulsantwort der Modelle Foster-Modell 4. Ordnung und reduziertes Modell 2. Ordnung.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

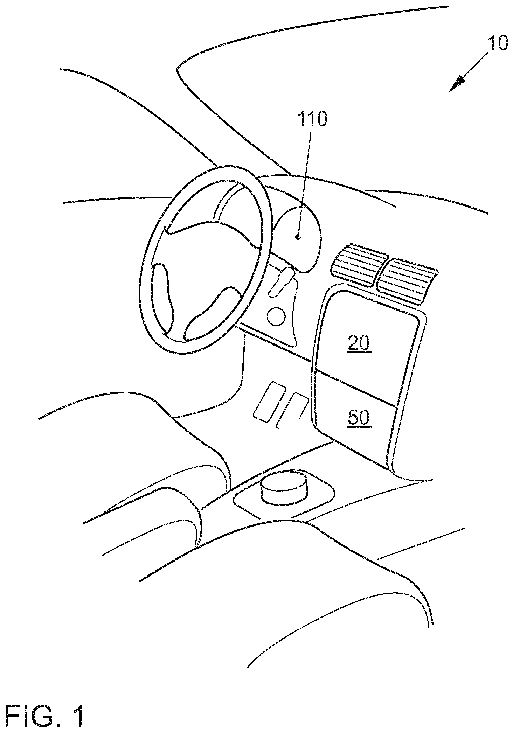

Fig. 1 zeigt das typische Cockpit eines Fahrzeuges 10. Dargestellt ist ein Personenkraftwagen Pkw. Das Fahrzeug 10 ist als Elektrofahrzeug mit Elektromotor als Antriebsmotor ausgestattet. Als Fahrzeug 10 kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Schienenfahrzeuge usw. Der Einsatz der Erfindung wäre allgemein bei Landfahrzeugen, Schienenfahrzeugen, Wasserfahrzeugen und Luftfahrzeugen möglich.

Wie Eingangs beschrieben, sind verschiedene Elektromotoren für verschiedene Komfortfunktionen in dem Fahrzeug eingesetzt. Für diese ist die hier beschriebene Lösung weniger interessant, weil diese Elektromotoren nicht permanent während der Fahrt in Betrieb sind und deshalb hohe Temperaturen bei den sie ansteuernden Halbleitermodulen kaum vorkommen. Anders ist es allerdings bei dem Elektromotor, der das Fahrzeug antreibt und dem Elektromotor der für die Lenkhilfe eingesetzt wird, weil diese Elektromotoren während des Betriebes permanent angesteuert werden. Weiter ist in Fig. 1 eine Anzeigeeinheit eines Infotainment-Systems mit Bezugszeichen hervorgehoben. Es handelt sich um einen berührungsempfindlichen Bildschirm 20, der in der Mittelkonsole angebracht ist.

Der berührungsempfindliche Bildschirm 20 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainment-Systems wird hauptsächlich der berührungsempfindliche Bildschirm 20 ("Touchscreen") benutzt, wobei dieser Bildschirm 20 insbesondere von einem Fahrer des Fahrzeugs 10, aber auch von einem Beifahrer des Fahrzeugs 10 gut eingesehen und bedient werden kann. Unterhalb des Bildschirms 20 können zudem mechanische Bedienelemente, beispielsweise Tasten, Drehregler oder Kombinationen hiervon, wie beispielsweise Drückdrehregler, in einer Eingabeeinheit 50 angeordnet sein. Typischerweise ist auch eine Lenkradbedienung von Teilen des Infotainment-Systems möglich. Dafür sind die Fahrzeuge mit einer sogenannten Multifunktionslenkrad-Bedienung ausgestattet. Diese Einheit ist nicht separat dargestellt, sondern wird als Teil der Eingabeeinheit 50 betrachtet.

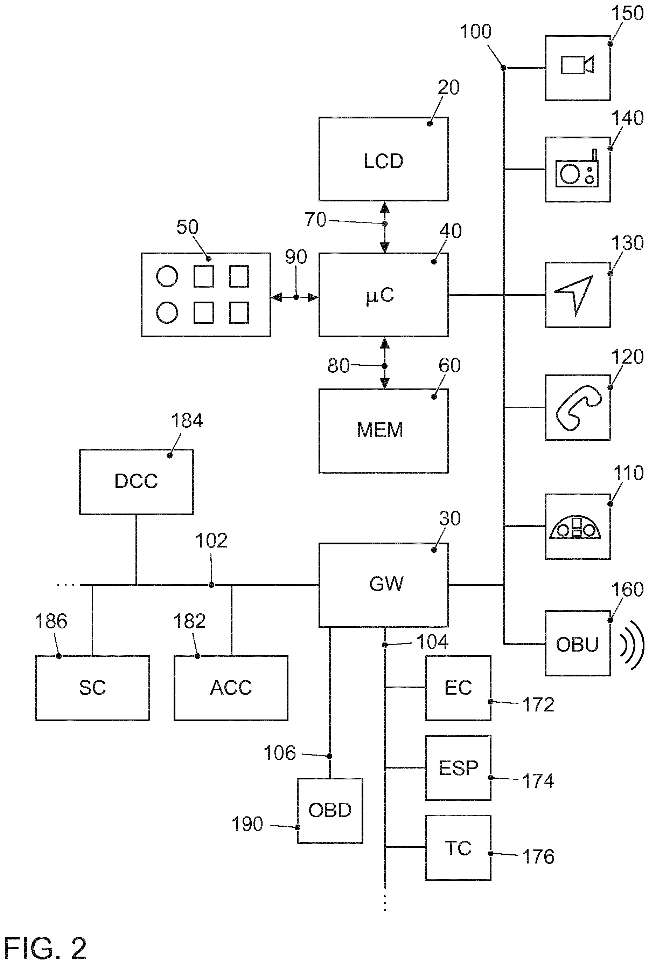

Fig. 2 zeigt schematisch ein Blockschaltbild der Kfz-Elektronik sowie beispielhaft einige Teilsysteme oder Applikationen des Infotainment-Systems. Das Infotainment-System umfasst: die berührungsempfindliche Anzeigeeinheit 20, eine Recheneinrichtung 40, eine Eingabeeinheit 50 und einen Speicher 60. Die Anzeigeeinheit 20 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 20 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 20 Steuerdaten zum Ansteuern der Anzeigefläche des Touchscreens 20 von der Recheneinrichtung 40. Über die Datenleitung 70 werden auch Steuerdaten der eingegebenen Befehle von dem Touchscreen 20 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für mögliche Einblendungen von Zusatzinformationen.

Die weiteren Teile des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie IEEE 802.03cg in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Für die drahtlose Kommunikation nach innen und außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation etc.

Der Kommunikationsbus 100 des Infotainment-Systems ist mit einem Gateway 30 verbunden. Daran angeschlossen sind auch die anderen Teile der Kfz-Elektronik. Zum Einen der Kommunikationsbus 104 des Antriebsstrangs, der typischerweise in Form des CAN-Bus realisiert wird. Als Beispiele sind die Steuergeräte des Antriebsstrangs Motorsteuergerät 172, ESP-Steuergerät 174 und Getriebesteuergerät 176 genannt und gezeigt. Weiter der Kommunikationsbus 102 für Fahrerassistenzsysteme, der in Form des FlexRay-Busses ausgebildet sein kann. Dabei sind drei Fahrerassistenzsysteme dargestellt: ein Fahrerassistenzsystem 182 zur automatischen Abstandsregelung ACC entsprechend Adaptive Cruise Control, ein Fahrerassistenzsystem DCC zur adaptiven Fahrwerksregelung 184, entsprechend Dynamic Chassis Control und ein Lenkhilfesystem 186. Weiterhin ist noch ein Kommunikationsbus 106 an das Gateway 30 angeschlossen. Dieser verbindet das Gateway 30 mit einer On-Board Diagnoseschnittstelle 190. Die Aufgabe des Gateway 30 besteht darin, die Formatumwandlungen für die verschiedenen Kommunikationssysteme 100, 102, 104, 106 zu machen, sodass untereinander Daten ausgetauscht werden können.

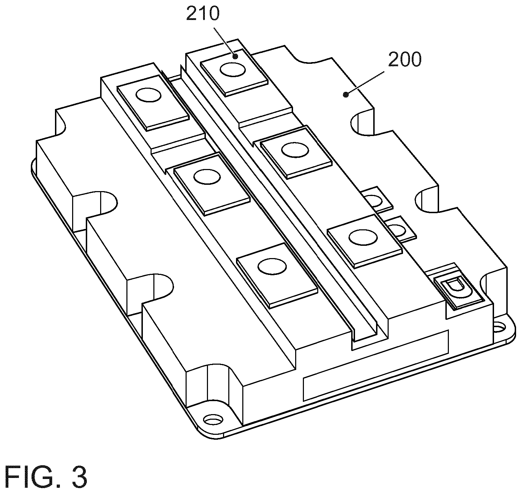

Es handelt sich bei den erwähnten Halbleitermodulen um Module mit Leistungshalbleitern. Solche Module werden typischerweise als IGBT-Module ausgeführt, entsprechend Insulated-Gate Bipolar Transistor. Die IGBT-Module sind typischerweise direkt am jeweiligen Elektromotor angebracht. Wie beschrieben, würde das Motorsteuergerät 172 das entsprechende IGBT-Modul des Antriebsmotors ansteuern und das Lenkhilfe-Steuergerät 186 das IGBT-Modul des Elektromotors des Lenkhilfesystems. Fig. 3 zeigt die Ansicht eines typischen IGBT-Moduls 200 mit 6 IGBTs 210. Zusätzlich enthalten die IGBT-Module 200 pro IGBT 210 eine Freilaufdiode, die ja ebenfalls Halbleiterelemente sind, und die IGBTs 210 vor Überspannungen schützen.

Das Temperaturverhalten des jeweiligen IGBT-Moduls 200 ist im jeweiligen Datenblatt des Halbleitermodul-Herstellers beschrieben.

Ein Beispiel eines Datenblattes wird von der Firma Infineon angegeben. Es handelt sich um das Datenblatt für das IGBT-Modul FS820R08A6P2B. Darin wird auf das Foster-Modell Bezug genommen und es werden die Partialbruch-Koeffizienten in Form von r- und $\tau$-Paaren angegeben.

| Index | thermische Widerstände | Zeitkonstanten |
|-------|------------------------|----------------|
|       | [K/W]                  | [s]            |
| 1     | $r_1=0,005$            | $\tau_1=0,001$ |
| 2     | $r_2=0,05$             | $\tau_2=0,03$  |
| 3     | $r_3=0,065$            | $\tau_3=0,25$  |
| 4     | $r_4=0,02$             | $\tau_4=1,5$   |

Im Datenblatt dieses Moduls werden die Parameter für ein Foster-Modell von Ordnung 4 angegeben. Die Parameter sind die vier thermische Widerstände $r_1$, ..., $r_4$ und die entsprechende vier Zeitkonstanten $\tau_1$, ..., $\tau_4$. Die Übertragungsfunktion der Laplace-Transformation für ein Foster-Modell von Ordnung 4 lautet im Frequenzbereich (s ist die Laplace-Variable) in Partialbruchzerlegung:

$$H_{Foster,A}(s) = \frac{\frac{r_1}{\tau_1}}{s + \frac{1}{\tau_1}} + \frac{\frac{r_2}{\tau_2}}{s + \frac{1}{\tau_2}} + \frac{\frac{r_3}{\tau_3}}{s + \frac{1}{\tau_3}} + \frac{\frac{r_4}{\tau_4}}{s + \frac{1}{\tau_4}}$$

Für eine Berechnung in einem digitalen Rechner wird die kontinuierliche Übertragungsfunktion in eine zeitdiskrete Übertragungsfunktion umgewandelt. Das zeitdiskrete Modell von Ordnung 4 lautet im z-Bereich:

$$H_{Foster,A}(z) = \frac{a_4 z^4 + a_3 z^3 + a_2 z^2 + a_1 z + a_0}{z^4 + b_3 z^3 + b_2 z^2 + b_1 z + b_0}$$

Die Parameter $a_0$, ..., $a_4$ und $b_0$, ..., $b_3$ werden aus den Datenblattparametern $r_1$, ..., $r_4$ und $\tau_1$, ..., $\tau_4$ sowie aus dem Rechentakt berechnet.

Zunächst werden die Ergebnisse für die Modellreduktion zu einem Modell von Ordnung 1 nach der Methode der "Balanced Truncation" vorgestellt. Es wird für die Zeitdiskretisierung ein Rechentakt von 0,5 ms angenommen.

Ein reduziertes Modell von Ordnung 1 wird im z-Bereich so dargestellt:

$$H_{red,1}(z) = \frac{\alpha_1 z + \alpha_0}{z + \beta_0}$$

Mit dem reduzierten Modell von Ordnung 1 wird der Rechenaufwand ungefähr um einen Faktor 4 reduziert (verglichen mit dem exakteren Modell von Ordnung 4).

Die Reduktion wird für definierte Frequenzbereiche optimiert. Als Anwendung wird ein Umrichter für einen Antriebsmotor in dem Elektro-Fahrzeug 10 betrachtet. Durch die Auslegung des Antriebs entstehen die thermischen Verluste in den Halbleiterelementen während der Fahrt im Bereich von 3,5 bis 1000 Hz, oder als Kreisfrequenz $\omega$ angegeben ca. 22 bis 6280 rad/s, wenn die Fahrzeuggeschwindigkeit variiert. Hier wird angemerkt, dass die angegebene Kreisfrequenz nicht mit der Drehzahl des Elektromotors übereinstimmt. Es handelt sich vielmehr um die Kreisfrequenz der Verlustleistung in dem Halbleiter mit der Einheit rad/s. Allgemein gilt die folgende Umrechnungsformel: Kreisfrequenz $\omega = 2\pi * f$, wobei $f$ der Frequenz in Hz entspricht.

Die reduzierten Modelle werden daher in dem gezeigten Beispiel für die zwei folgenden Frequenzbereiche optimiert:

- Gleichanteil der Verlustleistung: 0 bis 0,01 Hz (Kreisfrequenz 0 bis 0,0628 rad/s)
- variable Frequenz der Verlustleistung im Fahrbereich: 3,5 bis 1000 Hz (Kreisfrequenz 22 bis 6280 rad/s).

Hier wird zum Vergleich erwähnt, dass die Angaben 3,5 Hz und 1000 Hz einem Fahrbereich des Elektrofahrzeuges entsprechen, der sich von Schrittgeschwindigkeit bis zu ca. 70 km/h erstreckt.

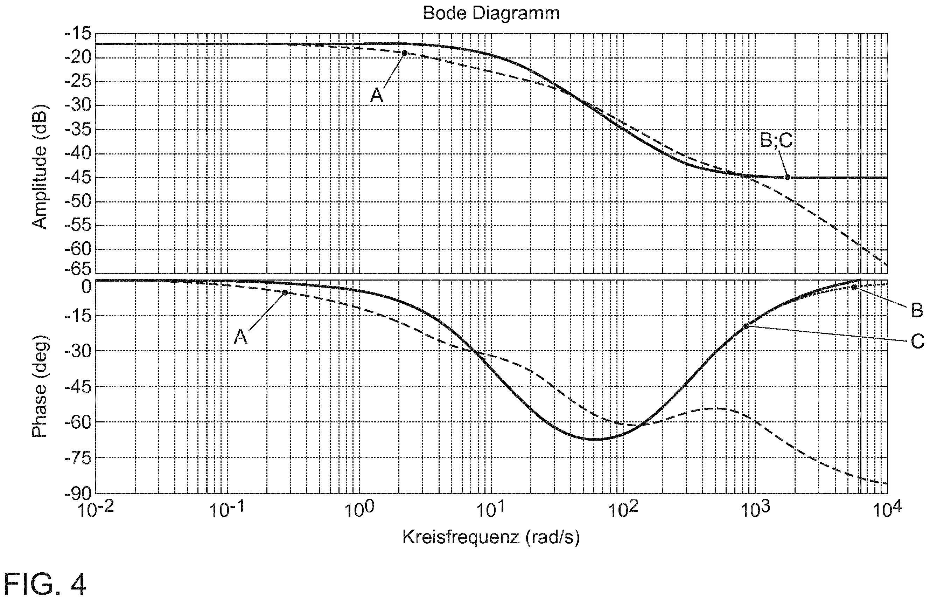

Die Fig. 4 zeigt die Ergebnisse für das reduzierte Modell von Ordnung 1 in Form eines Bode-Diagramms. Damit wird Amplitude und Phase der Übertragungsfunktion dargestellt. Die Kreisfrequenz ist auf der Abszisse in rad/s angegeben. Im oberen Teil wird entlang der Ordinate die Amplitude aufgetragen in Dezibel und im unteren Teil die Phase in deg. Die Kurven A entsprechen den Ergebnissen für das kontinuierliche Foster-Modell mit Ordnung 4. Die Kurven B entsprechen den Ergebnissen für das reduzierte kontinuierliche Modell der Ordnung 1. Die Kurven C entsprechen den Ergebnissen für das reduzierte, zeitdiskrete Modell der Ordnung 1. Deutlich ist zu erkennen, dass in dem wichtigen Bereich von 0 bis 0,1 rad/s die Kurven sehr gut zur Deckung kommen und es keine großen Abweichungen zu dem kontinuierlichen Foster-Modell der Ordnung 4 gibt. Dies gilt sowohl für die Amplitude wie auch für die Phase. Im oberen Frequenzbereich ab ca. 2000 rad/s gibt es Abweichungen sowohl bei Amplitude und Phase. Bei den beiden reduzierten Modellen 1. Ordnung kontinuierlich und zeitdiskret ergibt sich kaum ein Unterschied bei der Amplitude. Beide Kurven B und C liegen fast genau übereinander. Lediglich für die Phase wurde ein ersichtlicher Unterschied im Bereich von 2000 rad/s und höher errechnet. Im Frequenzbereich von 22 bis 6280 rad/s, insbesondere nahe von 22 rad/s, ist die Genauigkeit des reduzierten Modell 1. Ordnung unzureichend. Bei einer Verlustleistung von 700 W, entsprechend der Angabe für maximale Leistung im Datenblatt des IGBT-Moduls, entsteht ein Fehler der berechneten Temperatur von 8,5 K.

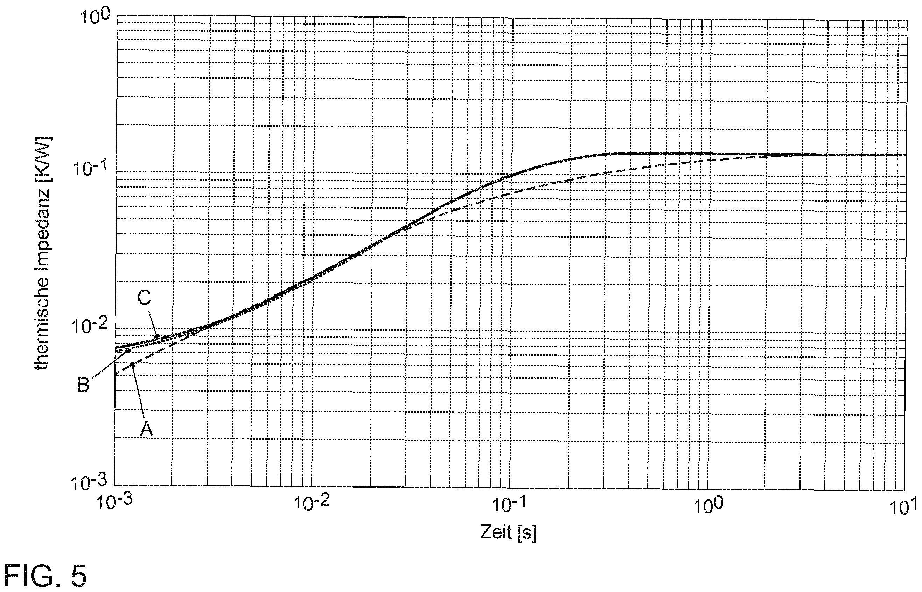

Fig. 5 zeigt einen Vergleich der thermischen Impedanzen für die reduzierten Modelle der Ordnung 1 im Vergleich zu dem kontinuierlichen Foster-Modell der Ordnung 4. Bei beiden reduzierten Modellen ist kein merklicher Unterschied zu erkennen. In beiden Fällen kommen die beiden Kurven auch im so wichtigen Bereich mit geringer Ansteuergeschwindigkeit, also bei t = 4 s, fast zur Deckung mit der Kurve für das Foster-Modell 4. Ordnung.

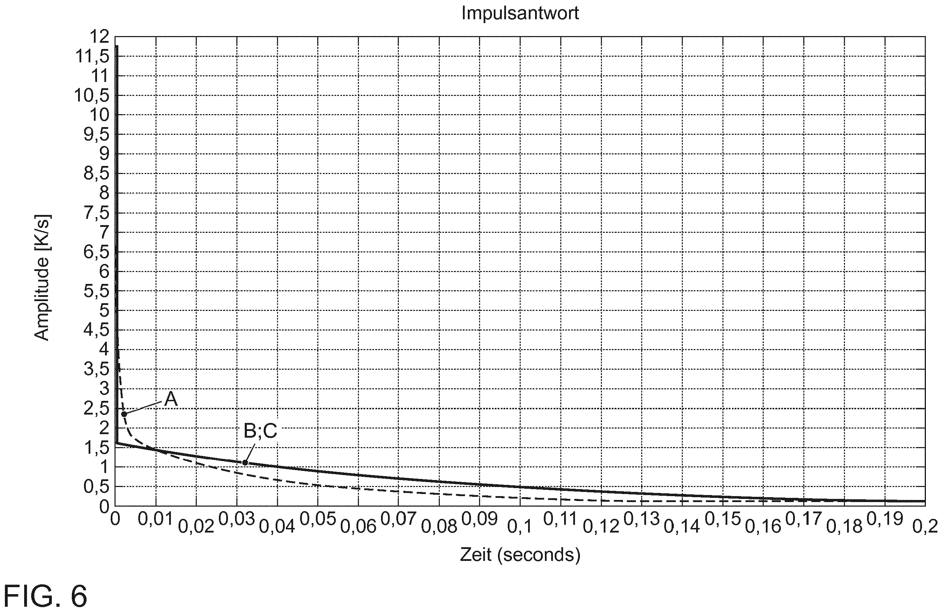

Fig. 6 zeigt einen Vergleich der Impulsantworten für die reduzierten Modelle der Ordnung 1 im Vergleich zu dem kontinuierlichen Modell der Ordnung 4. Bei beiden reduzierten Modellen ist kein merklicher Unterschied zu erkennen. Auch hier kommen beide Kurven B, C für große Zeitwerte nach dem Impuls zur Deckung mit dem Foster-Modell 4. Ordnung. Bei kurzen Zeitwerten nahe Null liefert das zeitdiskrete, reduzierte Modell 1. Ordnung ein Ergebnis von 11,8 K/s, im Vergleich zu 7 K/s bei dem kontinuierlichen Foster-Modell 4. Ordnung.

Für das angegebene Beispiel wird als Zweites eine Modellreduktion durch die Methode "Balanced Truncation" zu einem Modell von Ordnung 2 angegeben. Das reduzierte Foster-Modell von Ordnung 2 wird im z-Bereich so dargestellt:

$$H_{red,2}(z) = \frac{\alpha_2 z^2 + \alpha_1 z + \alpha_0}{z^2 + \beta_1 z + \beta_0}$$

Mit dem reduzierten Modell von Ordnung 2 wird der Rechenaufwand ungefähr um einen Faktor 2 reduziert (verglichen mit dem exakteren Modell der Ordnung 4).

Die Reduktion wird für die gleichen Frequenzbereiche optimiert wie die Reduktion zu dem Modell von Ordnung 1.

Für die Zeitdiskretisierung wird wieder ein Rechentakt von 0,5 ms verwendet.

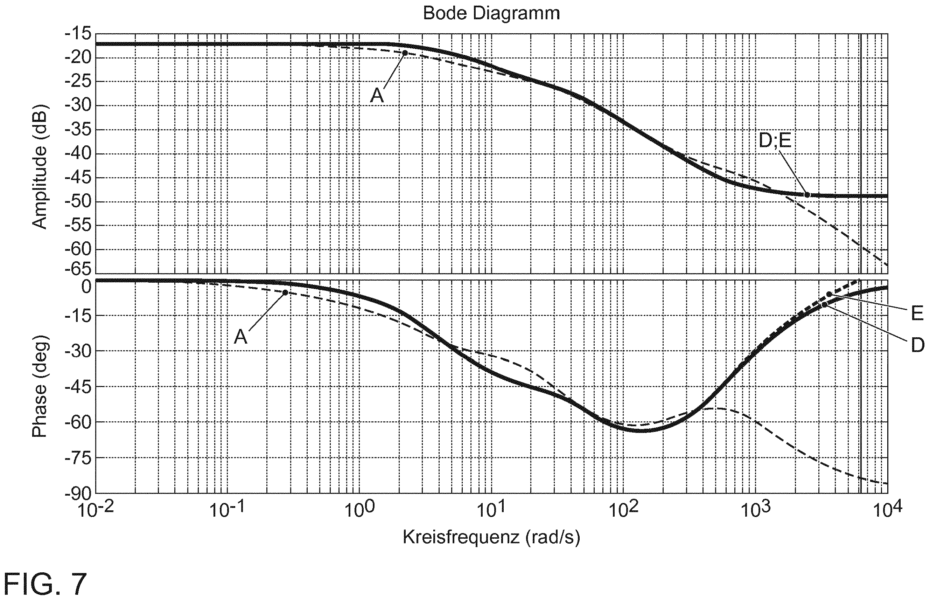

Die Fig. 7 zeigt die Ergebnisse für das reduzierte Modell von Ordnung 2 in Form des Bode-Diagramms. Die Kurven A entsprechen den Ergebnissen für das kontinuierliche Foster-Modell mit Ordnung 4. Die Kurven D entsprechen den Ergebnissen für das reduzierte kontinuierliche Modell der Ordnung 2. Die Kurven E entsprechen den Ergebnissen für das reduzierte, zeitdiskrete Modell der Ordnung 2. Deutlich ist zu erkennen, dass in dem wichtigen Bereich von 0 bis 0,1 rad/s die Kurven sehr gut zur Deckung kommen und es keine großen Abweichungen zu dem kontinuierlichen Foster-Modell der Ordnung 4 gibt. Dies gilt sowohl für die Amplitude wie auch für die Phase. Im oberen Frequenzbereich ab ca. 2000 rad/s gibt es Abweichungen sowohl bei Amplitude und Phase. Bei den beiden reduzierten Modellen 2. Ordnung kontinuierlich und zeitdiskret ergibt sich kaum ein Unterschied bei der Amplitude. Beide Kurven D und E liegen fast genau übereinander. Lediglich für die Phase wurde ein ersichtlicher Unterschied im Bereich von 2000 rad/s und höher errechnet. Die Abweichungen in dem Frequenzbereich von 22 bis 6280 rad/s sind geringer als bei dem reduzierten Modell 1. Ordnung. Bei einer Verlustleistung von 700 W, entsprechend der Angabe für maximale Leistung im Datenblatt des IGBT-Moduls, bleibt der Fehler der berechneten Temperatur betragsmäßig kleiner als 5 K.

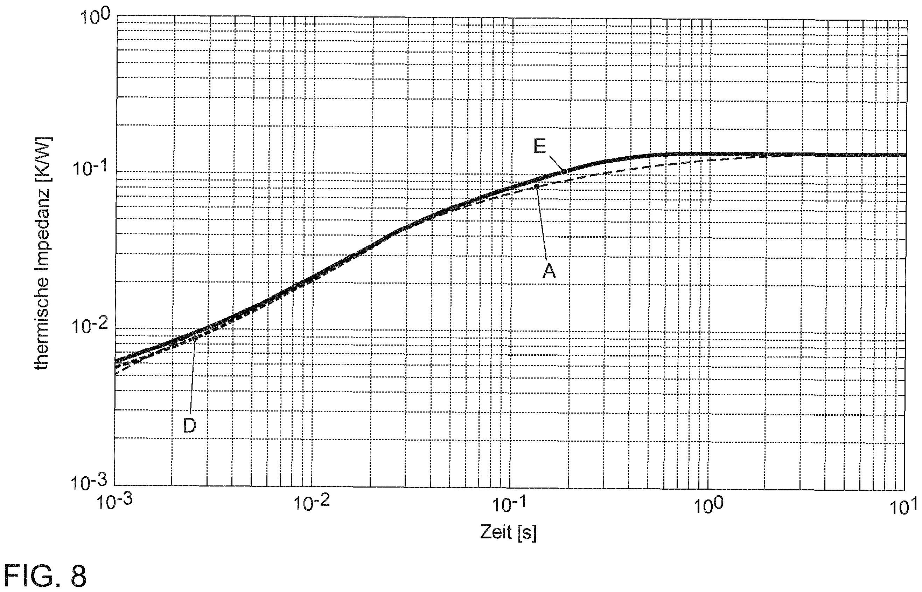

Fig. 8 zeigt einen Vergleich der thermischen Impedanzen für die reduzierten Modelle der Ordnung 2 im Vergleich zu dem kontinuierlichen Modell der Ordnung 4. Bei beiden reduzierten Modellen ist kein merklicher Unterschied zu erkennen. In beiden Fällen kommen die beiden Kurven auch im so wichtigen Bereich mit geringer Ansteuergeschwindigkeit, also bei t = 4 s, fast zur Deckung mit der Kurve für das Foster-Modell 4. Ordnung.

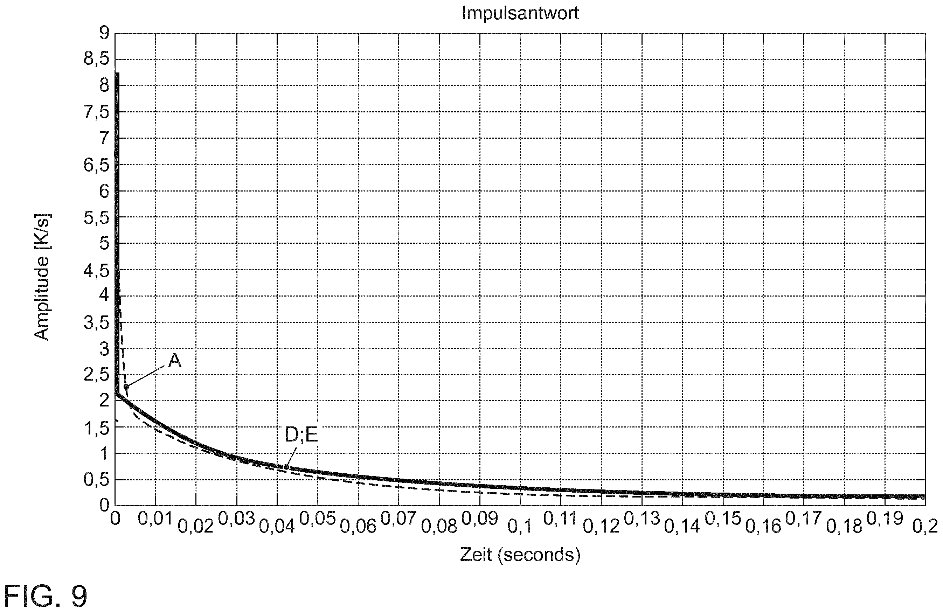

Fig. 9 zeigt einen Vergleich der Impulsantworten für die reduzierten Modelle der Ordnung 2 im Vergleich zu dem kontinuierlichen Foster-Modell der Ordnung 4. Bei beiden reduzierten Modellen ist kein merklicher Unterschied zu erkennen. Auch hier kommen beide Kurven d), e) für große Zeitwerte nach dem Impuls zur Deckung mit dem Foster-Modell 4. Ordnung. Bei kurzen Zeitwerten nahe Null liefert das zeitdiskrete, reduzierte Modell 2. Ordnung ein Ergebnis von 8,2 K/s, im Vergleich zu 7 K/s bei dem kontinuierlichen Modell 4. Ordnung. Die Abweichung ist für dieses Modell geringer.

Insgesamt betrachtet zeigt das reduzierte Modell der Ordnung 2 eine größere Genauigkeit als das Modell der Ordnung 1.

Die Genauigkeit der reduzierten Modelle wird mit der Supremumsnorm $\|H(s)\|_\infty$ angegeben. Das Modell von Ordnung 2 ist genauer als das Modell von Ordnung 1.

|  | $\|H_{red}(s) - H_{Foster,4}(s)\|_\infty$ |
|---|---|
| Modell von Ordnung 1 | 0,0419 K/W |
| Modell von Ordnung 2 | 0,0229 K/W |

Die Wahl der Ordnung für das reduzierte Modell, z.B. Ordnung 1 oder Ordnung 2, resultiert aus einem Kompromiss zwischen der notwendigen Genauigkeit auf der einen Seite und dem Rechenaufwand auf der anderen Seite. Hier wird als Leitlinie empfohlen, das reduzierte Modell höherer Ordnung immer dann einzusetzen, wenn die Abweichung in einem gewählten Bereich bei der Berechnung des Temperatureffektes nach dem Modell niedrigerer Ordnung betragsmäßig größer als 5 K gegenüber dem exakteren Foster-Modell der Ordnung 4 liegt.

Weiterhin ist es möglich, die Qualität der reduzierten Modelle durch Simulationen zu prüfen. Die betrachtete leistungselektronische Schaltung wird für die geplanten Betriebsbedingungen simuliert. Die thermischen Verluste in den Halbleiterelementen werden in der Simulation auch berechnet. Die berechneten thermischen Verluste werden als Eingangsgrößen für die thermischen Modelle verwendet. Dies ermöglicht einen Vergleich zwischen dem exakteren Foster-Modell höherer Ordnung und den reduzierten thermischen Modellen, unter realitätsnahen Bedingungen.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Bezugszeichenliste

| | |
|---|---|
| 10 | Fahrzeug |
| 20 | berührungsempfindliche Anzeigeeinheit |
| 30 | Gateway |
| 40 | Recheneinheit |
| 50 | Eingabeeinheit |
| 60 | Speichereinheit |
| 70 | Datenleitung zur Anzeigeeinheit |
| 80 | Datenleitung zur Speichereinheit |
| 90 | Datenleitung zur Eingabeeinheit |
| 100 | 1. Datenbus |
| 102 | 2. Datenbus |
| 104 | 3. Datenbus |
| 106 | 4. Datenbus |
| 110 | Kombiinstrument |
| 120 | Telefon |
| 130 | Navigationsgerät |
| 140 | Radio |
| 150 | Kamera |
| 160 | Kommunikationsmodul |
| 172 | Motorsteuergerät |
| 174 | ESP-Steuergerät |
| 176 | Getriebe-Steuergerät |
| 182 | Abstandsregelungs-Steuergerät |
| 184 | Fahrwerk-Steuergerät |
| 186 | Lenkhilfe-Steuergerät |
| 190 | On-Board Diagnosestecker |
| 200 | IGBT-Modul |
| 210 | IGBT |
| A | Temperaturverhalten für Foster-Modell 4. Ordnung (kontinuierlich) |
| B | Temperaturverhalten für reduziertes Modell 1. Ordnung (kontinuierlich) |
| C | Temperaturverhalten für reduziertes Modell 1. Ordnung (zeitdiskret) |
| D | Temperaturverhalten für reduziertes Modell 2. Ordnung (kontinuierlich) |
| E | Temperaturverhalten für reduziertes Modell 2. Ordnung (zeitdiskret) |

**Patentansprüche**

1.  Verfahren zum Schätzen der Temperatur eines Leistungs-Halbleiterelementes (210), wobei das Leistungs-Halbleiterelement (210) von einer Recheneinheit (172, 186) angesteuert wird, und wobei die Temperaturschätzung in derselben oder einer anderen Recheneinheit durchgeführt wird, **dadurch gekennzeichnet, dass** die Recheneinheit (172, 186) folgende Schritte ausführt:

    Angeben einer Übertragungsfunktion für eine thermische Impedanz entweder aus thermischen Widerständen des Leistungs-Halbleiterelementes (210) und entsprechenden thermischen Zeitkonstanten, oder, in äquivalenter Form, aus einer Verlustleistung und einer Temperaturdifferenz,
    zeitdiskrete Berechnung der Übertragungsfunktion nach einem reduzierten Temperaturmodell,
    Abschätzen der Temperatur des Leistungs-Halbleiterelementes (210) durch die Verwendung des reduzierten Temperaturmodells,
    überwachen der Temperatur und gegebenfalls einschreiten, wenn eine unzulässige Temperatur des Leistungs-Halbleiterelementes (210) erreicht wird oder schon vorher, um Schäden zu verhindern,
    wobei zur Temperaturschätzung eine in der Ordnung reduzierte Version eines für das Halbleiterelement (210) angegebenen Temperaturmodells eingesetzt wird, die mittels Balanced Truncation für zwei oder mehr getrennte Frequenzbereiche optimiert ist, und wobei ein Frequenzbereich durch das Frequenzspektrum von Strom und Spannung im Leistungs-Halbleiterelementes (210) definiert wird.

2.  Verfahren nach Anspruch 1, wobei das Temperaturmodell höherer Ordnung einem parametrierten Foster-Modell der Ordnung 3, 4 oder 5 entspricht.

3.  Verfahren nach Anspruch 2 , wobei das parametrierte Foster-Modell nach folgender Formel berechnet wird,

$$Z_{th}(t) = \sum_{i=1}^{N} r_i \left( 1 - e^{-\frac{t}{\tau_i}} \right),$$

wobei $Z_{th}$ die thermische Impedanz ist,
wobei t die Zeit ist,
wobei N die Ordnung des Foster-Modells ist,
wobei $r_1$ bis $r_N$ die im Datenblatt angegebenen N thermischen Widerstände des Leistungs-Halbleiterelementes (210) sind, und $\tau_1$ bis $\tau_N$ die entsprechenden N thermischen Zeitkonstanten sind,
wobei die Übertragungsfunktion des Foster-Modells nach folgender Formel berechnet wird:

$$H_{Foster}(s) = \sum_{i=1}^{N} \frac{\frac{r_i}{\tau_i}}{s + \frac{1}{\tau_i}},$$

wobei s die Laplace-Variable der Übertragungsfunktion ist,
wobei die Übertragungsfunktion für eine zeitdiskrete Berechnung nach folgender Formel berechnet wird,

$$H_{Foster}(z) = \frac{\sum_{i=0}^{N} a_i z^i}{z^N + \sum_{i=0}^{N-1} b_i z^i},$$

wobei die Parameter $a_0$, ..., $a_N$ und $b_0$, ..., $b_{N-1}$ aus den Parametern $r_1$, ..., $r_N$ und $\tau_1$, ..., $\tau_N$ sowie aus dem gewählten Rechentakt berechnet werden.

4.  Verfahren nach Anspruch 3, wobei für eine zeitdiskrete Berechnung der Übertragungsfunktion nach dem reduzierten Modell erster Ordnung die folgende Formel eingesetzt wird,

$$H_{red,1}(z) = \frac{\alpha_1 z + \alpha_0}{z + \beta_0},$$

wobei $\alpha_0$ bis $\alpha_1$ und $\beta_0$ aus den Parameter $r_1$ bis $r_N$ und $\tau_1$, ..., $\tau_N$ sowie aus dem gewählten Rechentakt berechnet werden.

5. Verfahren nach Anspruch 3, wobei für eine zeitdiskrete Berechnung der Übertragungsfunktion nach dem reduzierten Modell zweiter Ordnung die folgende Formel eingesetzt wird:

$$H_{red,2}(z) = \frac{\alpha_2 z^2 + \alpha_1 z + \alpha_0}{z^2 + \beta_1 z + \beta_0},$$

wobei $\alpha_0$ bis $\alpha_2$ und $\beta_0$ bis $\beta_1$ aus den Parameter $r_1$ bis $r_N$ und $\tau_1$, ..., $\tau_N$ sowie aus dem gewählten Rechentakt berechnet werden.

6. Verfahren nach Anspruch 3, wobei für eine zeitdiskrete Berechnung der Übertragungsfunktion nach dem reduzierten Modell dritter Ordnung die folgende Formel eingesetzt wird:

$$H_{red,3}(z) = \frac{\alpha_3 z^3 + \alpha_2 z^2 + \alpha_1 z + \alpha_0}{z^3 + \beta_2 z^2 + \beta_1 z + \beta_0},$$

wobei $\alpha_0$ bis $\alpha_3$ und $\beta_0$ bis $\beta_2$ aus den Parameter $r_1$ bis $r_N$ und $\tau_1$, ..., $\tau_N$ sowie aus dem gewählten Rechentakt berechnet werden.

7. Verfahren nach einem der Ansprüche 2 bis 6, wobei ein reduziertes Modell höherer Ordnung gegenüber einem reduzierten Modell niedrigerer Ordnung zur Temperaturschätzung dann eingesetzt wird, wenn die Abweichung in einem gewählten Frequenzbereich bei der Berechnung des Temperatureffektes nach dem reduzierten Modell niedrigerer Ordnung betragsmäßig größer als 5 K gegenüber dem exakteren Foster-Modell der Ordnung N liegt.

8. Vorrichtung mit einem Leistungs-Halbleitermodul (200) und einer Recheneinheit (172, 186), welche Mittel aufweist, die dazu ausgebildet sind, das Verfahren nach einem der vorhergehenden Ansprüche auszuführen.

9. Vorrichtung nach Anspruch 8, wobei das Leistungs-Halbleitermodul (200) eine Anzahl von Leistungshalbleiterelementen (210) aufweist.

10. Vorrichtung nach Anspruch 8 oder 9, wobei das Leistungs-Halbleitermodul (200) ein IGBT-Modul, entsprechend Insulated-Gate Bipolar Transistor, ist.

11. Computerprogramm aufweisend einen Programmcode, der bei Abarbeitung in einer Recheneinrichtung die Verfahrensschritte nach einem der Ansprüche 1 bis 7 durchführt.

**Claims**

1. Method for estimating the temperature of a power semiconductor device (210), wherein the power semiconductor device (210) is controlled by a computing unit (172, 186), and wherein the temperature estimation is carried out in the same or a different computing unit, **characterized in that** the computing unit (172, 186) executes the following steps:

indicating a transfer function for a thermal impedance either from thermal resistances of the power semiconductor device (210) and corresponding thermal time constants, or, in equivalent form, from a power loss and a temperature difference,
time-discrete calculation of the transfer function according to a reduced temperature model, estimating the temperature of the power semiconductor device (210) by using the reduced temperature model,
monitoring the temperature, and if necessary intervening when an unacceptable temperature of the power semiconductor device (210) is reached or even before this in order to prevent damages, wherein a version, of reduced order, of a temperature model specified for the semiconductor device (210) is used for the temperature estimation, which is optimized for two or more separate frequency ranges by means of balanced truncation, and wherein a frequency range is defined by the frequency spectrum of current and voltage in the power semiconductor device (210).

2. Method according to Claim 1, wherein the higher-order temperature model corresponds to a parametrized Foster model of 3rd, 4th, or 5th order.

3. Method according to Claim 2, wherein the parametrized Foster model is calculated according to the following formula:

$$Z_{th}(t) = \sum_{i=1}^{N} r_i \left(1 - e^{-\frac{t}{\tau_i}}\right),$$

wherein $Z_{th}$ is the thermal impedance,
wherein t is the time,
wherein N is the order of the Foster model,
wherein $r_1$ to $r_N$ are the N thermal resistances of the power semiconductor device (210) that are specified in the data sheet,
and $\tau_1$ to $\tau_N$ are the corresponding N thermal time constants, wherein the transfer function of the Foster model is calculated according to the following formula:

$$H_{Foster}(s) = \sum_{i=1}^{N} \frac{\frac{r_i}{\tau_i}}{s + \frac{1}{\tau_i}},$$

wherein s is the Laplace variable of the transfer function,
wherein the transfer function for a time-discrete calculation is calculated according to the following formula:

$$H_{Foster}(z) = \frac{\sum_{i=0}^{N} a_i z^i}{z^N + \sum_{i=0}^{N-1} b_i z^i},$$

where the parameters $a_0$, ..., $a_N$ and $b_0$, ..., $b_{N-1}$ are calculated from the parameters $r_1$, ..., $r_N$ and $\tau_1$, ..., $\tau_N$, and also from the selected computing cycle.

4. Method according to Claim 3, wherein the following formula is used for a time-discrete calculation of the transfer function according to the reduced first-order model,

$$H_{red,1}(z) = \frac{\alpha_1 z + \alpha_0}{z + \beta_0},$$

wherein $\alpha_0$ to $\alpha_1$ and $\beta_0$ are calculated from the parameters $r_1$ to $r_N$ and $\tau_1$, ..., $\tau_N$, and also from the selected computing cycle.

5. Method according to Claim 3, wherein, for a time-discrete calculation of the transfer function according to the reduced second-order model, the following formula is used:

$$H_{red,2}(z) = \frac{\alpha_2 z^2 + \alpha_1 z + \alpha_0}{z^2 + \beta_1 z + \beta_0},$$

**EP 3 830 938 B1**

wherein $\alpha_0$ to $\alpha_2$ and $\beta_0$ to $\beta_1$ are calculated from the parameters $r_1$ to $r_N$ and $\tau_1, ..., \tau_N$, and also from the selected computing cycle.

6. Method according to Claim 3, wherein, for a time-discrete calculation of the transfer function according to the reduced third-order model, the following formula is used:

$$H_{red,3}(z) = \frac{\alpha_3 z^3 + \alpha_2 z^2 + \alpha_1 z + \alpha_0}{z^3 + \beta_2 z^2 + \beta_1 z + \beta_0},$$

wherein $\alpha_0$ to $\alpha_3$ and $\beta_0$ to $\beta_2$ are calculated from the parameters $r_1$ to $r_N$ and $\tau_1, ..., \tau_N$, and also from the selected computing cycle.

7. Method according to any one of Claims 2 to 6, wherein a reduced model of higher order is used for temperature estimation rather than a reduced model of lower order when. in calculation of the temperature effect according to the reduced lower-order model, the deviation in a selected frequency range is greater than 5 K compared to the more exact Foster model of Nth order.

8. Device comprising a power semiconductor module (200) and a computing unit (172, 186) which has means designed to carry out the method according to any of the preceding claims.

9. Device according to Claim 8, wherein the power semiconductor module (200) comprises a number of power semiconductor devices (210).

10. Device according to Claims 8 or 9, wherein the power semiconductor module (200) is an IGBT module or insulated-gate bipolar transistor.

11. Computer program comprising a program code which, when executed in a computing device, performs the method steps according to any of Claims 1 to 7.

**Revendications**

1. Procédé pour estimer la température d'un élément semi-conducteur de puissance (210), dans lequel l'élément semi-conducteur de puissance (210) est commandé par une unité de calcul (172, 186) et dans lequel l'estimation de température est réalisée dans la même unité de calcul ou dans une autre, **caractérisé en ce que** l'unité de calcul (172, 186) réalise les étapes suivantes :

spécification d'une fonction de transmission pour une impédance thermique soit à partir de résistances thermiques de l'élément semi-conducteur de puissance (210) et de constantes de temps thermiques correspondantes ou, sous forme équivalente, à partir d'une puissance dissipée et d'une différence de température,
calcul à temps discret de la fonction de transmission selon un modèle de température réduit, estimation de la température de l'élément semi-conducteur de puissance (210) par l'utilisation du modèle de température réduit,
surveillance de la température et le cas échéant intervention, lorsqu'une température inadmissible de l'élément semi-conducteur de puissance (210) est atteinte ou avant cela, afin d'éviter les dommages,
dans lequel, pour l'estimation de température, une version réduite en ordre d'un modèle de température spécifié pour l'élément semi-conducteur (210) est utilisée, qui est optimisée au moyen d'une troncature équilibrée pour deux plages de fréquences séparées ou plus et dans lequel une plage de fréquence est définie par le spectre de fréquence du courant et de la tension dans l'élément semi-conducteur de puissance (210).

2. Procédé selon la revendication 1, dans lequel le modèle de température d'ordre supérieur correspond à un modèle de Foster paramétré d'ordre 3, 4 ou 5.

3. Procédé selon la revendication 2, dans lequel le modèle de Foster paramétré est calculé selon la formule suivante,

$$Z_{th}(t) = \sum_{i=1}^{N} r_i \left( 1 - e^{-\frac{t}{\tau_i}} \right),$$

dans lequel $Z_{th}$ désigne l'impédance thermique,
où t désigne le temps,
où N désigne l'ordre du modèle de Foster,
où $r_1$ à $r_N$ désignent les N résistances thermiques spécifiées dans la fiche technique de l'élément semi-conducteur de puissance (210),
et $\tau_1$ à $\tau_N$ désignent les N constantes de temps thermiques correspondantes, dans lequel la fonction de transmission du modèle de Foster est calculée selon la formule suivante :

$$H_{Foster}(s) = \sum_{i=1}^{N} \frac{\frac{r_i}{\tau_i}}{s + \frac{1}{\tau_i}},$$

où s désigne la variable de Laplace de la fonction de transmission,
dans lequel la fonction de transmission pour un calcul à temps discret est calculée selon la formule suivante :

$$H_{Foster}(z) = \frac{\sum_{i=0}^{N} a_i z^i}{z^N + \sum_{i=0}^{N-1} b_i z^i},$$

où les paramètres $a_0$, ..., $a_N$ et $b_0$, ..., $b_{N-1}$ sont calculés à partir des paramètres $r_1$, ..., $r_N$ et $\tau_1$, ..., $\tau_N$ ainsi qu'à partir de la cadence de calcul sélectionnée.

4. Procédé selon la revendication 3, dans lequel, pour un calcul à temps discret de la fonction de transmission selon le modèle réduit de premier ordre, la formule suivante est utilisée :

$$H_{red,1}(z) = \frac{\alpha_1 z + \alpha_0}{z + \beta_0},$$

où $\alpha_0$ à c<i et $\beta_0$ sont calculés à partir des paramètres $r_1$ à $r_N$ et $\tau_1$, ..., $\tau_N$ ainsi qu'à partir de la cadence de calcul sélectionnée.

5. Procédé selon la revendication 3, dans lequel, pour un calcul à temps discret de la fonction de transmission selon le modèle réduit de deuxième ordre, la formule suivante est utilisée :

$$H_{red,2}(z) = \frac{\alpha_2 z^2 + \alpha_1 z + \alpha_0}{z^2 + \beta_1 z + \beta_0},$$

où $\alpha_0$ à $\alpha_2$ et $\beta_0$ à $\beta_1$ sont calculés à partir des paramètres $r_1$ à $r_N$ et $\tau_1$, ..., $\tau_N$ ainsi qu'à partir de la cadence de calcul sélectionnée.

6. Procédé selon la revendication 3, dans lequel, pour un calcul à temps discret de la fonction de transmission selon le modèle réduit de troisième ordre, la formule suivante est utilisée :

$$H_{red,3}(z) = \frac{\alpha_3 z^3 + \alpha_2 z^2 + \alpha_1 z + \alpha_0}{z^3 + \beta_2 z^2 + \beta_1 z + \beta_0},$$

où $\alpha_0$ à $\alpha_3$ et $\beta_0$ à $\beta_2$ sont calculés à partir des paramètres $r_1$ à $r_N$ et $\tau_1$, ..., $\tau_N$ ainsi qu'à partir de la cadence de calcul sélectionnée.

7. Procédé selon l'une quelconque des revendications 2 à 6, dans lequel un modèle réduit d'ordre supérieur est utilisé par rapport à un modèle réduit d'ordre inférieur pour l'estimation de température lorsque l'écart dans la plage de fréquences sélectionnée lors du calcul de l'effet de température selon le modèle réduit d'ordre inférieur est supérieur, en amplitude, de 5 K par rapport au modèle de Foster exact d'ordre N.

8. Dispositif comprenant un module semi-conducteur de puissance (200) et une unité de calcul (172, 186), qui comporte des moyens qui sont conçus pour réaliser le procédé selon l'une quelconque des revendications précédentes.

9. Dispositif selon la revendication 8, dans lequel le module semi-conducteur de puissance (200) comporte un certain nombre d'éléments semi-conducteurs de puissance (210).

10. Dispositif selon la revendication 8 ou 9, dans lequel le module semi-conducteur de puissance (200) est un module IGBT,
correspondant à transistor bipolaire à grille isolée.

11. Programme informatique comportant un code de programme, qui, lors de l'exécution dans un dispositif de calcul, réalise les étapes de procédé selon l'une quelconque des revendications 1 à 7.

FIG. 1

FIG. 2

FIG. 3

FIG. 4

EP 3 830 938 B1

FIG. 5

FIG. 6

Bode Diagramm

FIG. 7

FIG. 8

EP 3 830 938 B1

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10260106 A1
- US 9705487 B2
- DE 102010014070 B4
- DE 102012213349 A1
- EP 1770851 A2
- CN 106326532 A
- CN 105224819 A
- US 2005160387 A